# EUROPÄISCHE PATENTSCHRIFT

(11) **EP 2 342 545 B1**
(45) Veröffentlichungstag und Bekanntmachung des Hinweises auf die Patenterteilung: **30.01.2013**
(21) Anmeldenummer: 09779093.5
(22) Anmeldetag: 26.02.2009
(51) Int. Cl.: G01L 1/16

(54) **KRAFTMESSRING MIT EINEM RINGFÖRMIGEN GEHÄUSE**
FORCE-MEASURING RING HAVING AN ANNULAR HOUSING
ANNEAU DYNAMOMÉTRIQUE AVEC BOÎTIER DE FORME ANNULAIRE

(30) Priorität: 04.11.2008 AT 17212008
(43) Veröffentlichungstag der Anmeldung: 13.07.2011
(73) Patentinhaber: Piezocryst Advanced Sensorics GmbH, 8020 Graz (AT)
(72) Erfinder: SCHRICKER, Alexander, 8046 Graz (AT); TURAN, Alparslan, 8010 Graz (AT); FRIEDL, Alexander, 8045 Graz (AT)
(74) Vertreter: Babeluk, Michael
(86) Internationale Anmeldenummer: PCT/EP2009/052283
(87) Internationale Veröffentlichungsnummer: WO 2010/052029

(56) Entgegenhaltungen:
- EP-A- 0 459 948
- WO-A-2004/070334
- AT-U1- 9 920

## Beschreibung

Die Erfindung betrifft einen Kraftmessring mit einem ringförmigen Gehäuse, welches zumindest ein piezoelektrisches Messelement aufnimmt, sowie mit einem Druckübertragungselement, welches über innere und äußere, kreisringförmige Membranbereiche mit dem Gehäuse verbunden, vorzugsweise verschweißt, ist. Die Erfindung betrifft weiters Vorrichtungen zur Messung von axial auf eine Welle oder einen Stempel wirkenden Kräften.

Kraftmessringe dienen zur Messung von Kräften, Drücken, Beschleunigungen und Momenten und werden dazu zwischen Kraftübertragungsmittel oder Maschinenteile eingespannt.

So ist beispielsweise aus der WO 2004/070334 A1 ein Messsensor mit Vorspannvorrichtung bekannt, welcher im Wesentlichen aus einem Adapterteil und einer Adapterhülse besteht. Der Adapterteil weist einstückig eine zentrale Spannhülse auf, die in eine zentrale Bohrung der Adapterhülse ragt und dort mit einer Mutter vorgespannt werden kann. In einer ringförmigen Aufnahme der Adapterhülse ist ein Kraftmessring integriert, wobei die Messelemente des Kraftmessringes in einem ringförmigen Gehäuse vorliegen und von einer am Adapterteil anliegen Membran abgedeckt sind. Die Membran ist unter Vorspannung mittels Verschweißung am Sensorgehäuse befestigt.

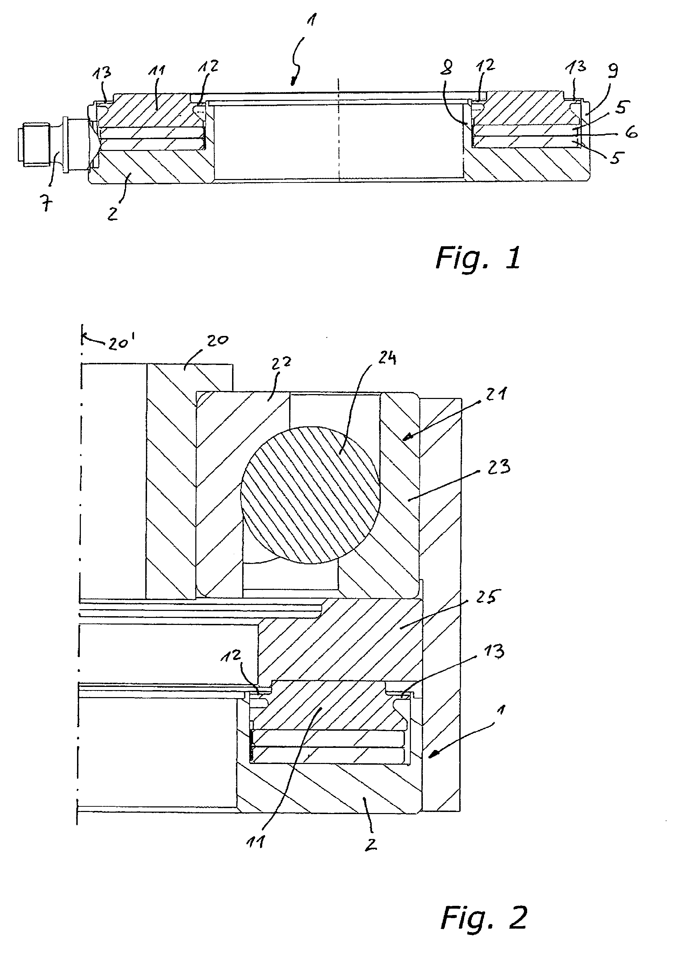

Detaillierter wird der bekannte Kraftmessring in Fig. 1 beschrieben, welcher beispielsweise in dem Sachbuch (G. GAUTSCHI, "Piezoelectric Sensors" Springer Verlag 2002) oder in AT 009 920 U1 dargestellt wird. Der Kraftmessring 1 weist ein ringförmiges Gehäuse 2 auf, welches eine durch einen Innenflansch 8 und einen Außenflansch 9 begrenzte ringförmige Aufnahme bildet, in welcher zwei piezoelektrische Messelemente 5 sowie eine dazwischen angeordnete Ableitelektrode 6 aufgenommen sind. Die Ableitelektrode 6 führt zu einem am Außenflansch 9 befestigten Steckerelement 7. Die auf den Kraftmessring 1 wirkende Kraft wird über das Druckübertragungselement 11 in die piezoelektrischen Messelemente 5 eingeleitet. Das Druckübertragungselement 11 weist einen inneren Membranbereich 12 sowie einen äußeren Membranbereich 13 auf, welche mit dem Innenflansch 8 bzw. dem Außenflansch 9 des Gehäuses 2 verschweißt sind. Derartige Kraftmessringe eignen sich für Messsituationen, bei welchen die zu messende Kraft über die Kontaktfläche des Druckübertragungselementes 11 gleichmäßig eingebracht wird. Es sind dies Messsituationen, wie sie beispielsweise in der oben zitierten WO 2004/070334 A1 dargelegt sind.

Es existieren jedoch auch Anwendungen, bei welchen nicht von einer über den Querschnitt der Druckübertragungselemente gleichmäßigen Krafteinleitung ausgegangen werden kann. Als Beispiel sei die Axialkraftmessung an einem Kugellager gemäß Fig. 2 genannt. Dabei muss die Kraft an einem der beiden Kugelkäfige abgenommen werden.

Fig. 2 zeigt im Querschnitt eine drehende Welle 20 mit einer Belastung in Axialrichtung, wobei die Wellenachse mit 20' bezeichnet ist. Das auf der drehenden Welle befestigte Kugellager 21 weist einen inneren Käfig 22 und einen äußeren Käfig 23 auf, mit welchem die Lagerkugeln 24 geführt werden. Bei einer Einleitung der Kraft auf den Kraftmessring 1 ist ein kreisringförmiges Zwischenstück 25 zur gleichmäßigen Verteilung der Kraft auf den Kraftmessring 1 notwendig. Als nachteilig bei dieser Anordnung sind einerseits die große Bauhöhe sowie die höhere Elastizität des Messaufbaues zu nennen.

Aufgabe der Erfindung ist es, einen Kraftmessring der eingangs beschriebenen Art derart zu verbessern, dass der Einsatz auch bei asymmetrischer Krafteinleitung und beschränkten Platzverhältnissen zufriedenstellend möglich ist. Insbesondere soll ein robuster Kraftmessring entwickelt werden, mit welchem Axialkräfte, die auf ein Axialkugellager wirken, gemessen werden können.

Diese Aufgabe wird erfindungsgemäß dadurch gelöst, dass der innere und der äußere Membranbereich des Kraftmessringes auf gegenüberliegenden Seiten einer durch das zumindest eine piezoelektrische Messelement definierten Symmetrieebene liegen.

Insbesondere ist vorgesehen, dass das Gehäuse einen ersten Gehäuseteil mit einem ringförmigen Innenflansch und einem ersten Druckübertragungselement sowie einen zweiten Gehäuseteil mit einem ringförmigen Außenflansch und einem zweiten Druckübertragungselement aufweist, wobei der innere Membranbereich zwischen dem Innenflansch und dem zweiten Druckübertragungselement und der äußere Membranbereich zwischen dem Außenflansch und dem ersten Druckübertragungselement angeordnet ist. Durch die erfindungsgemäße Ausführung des Kraftmessringes entsteht ein Messring mit hoher Steifigkeit und geringen Höhenabmessungen, wobei auf ein Zwischenstück zur krafteinleitenden Fläche, beispielsweise eines Axialkugellagers, verzichtet werden kann.

Die Erfindung wird im Folgenden anhand von Zeichnungen näher erläutert. Es zeigen:
- Fig. 1: einen Kraftmessring in einem Axialschnitt gemäß Stand der Technik;
- Fig. 2: die Einbausituation eines Kraftmessringes gemäß Stand der Technik zur Messung von Axialkräften die auf ein Axialkugellager einwirken;
- Fig. 3: eine Schnittdarstellung des Kraftmessringes gemäß Fig. 2 in vergrößerter Darstellung;
- Fig. 4: einen erfindungsgemäßen Kraftmessring in einer Schnittdarstellung gemäß Fig. 3
- Fig. 5: eine Einbausituation des erfindungsgemäßen Kraftmessringes in einer Darstellung gemäß Fig. 2;
- Fig. 6: und Fig. 7 weitere Ausführungsvarianten des erfindungsgemäßen Kraftmessringes in einer Schnittdarstellung gemäß Fig. 1; sowie
- Fig. 8: eine weitere Einbausituation eines erfindungsgemäßen Kraftmessringes in einer Schnittdarstellung.

Der in Fig. 1 und Fig. 2 dargestellte Kraftmessring 1 samt Einbausituation gemäß Stand der Technik wurde bereits eingangs beschrieben.

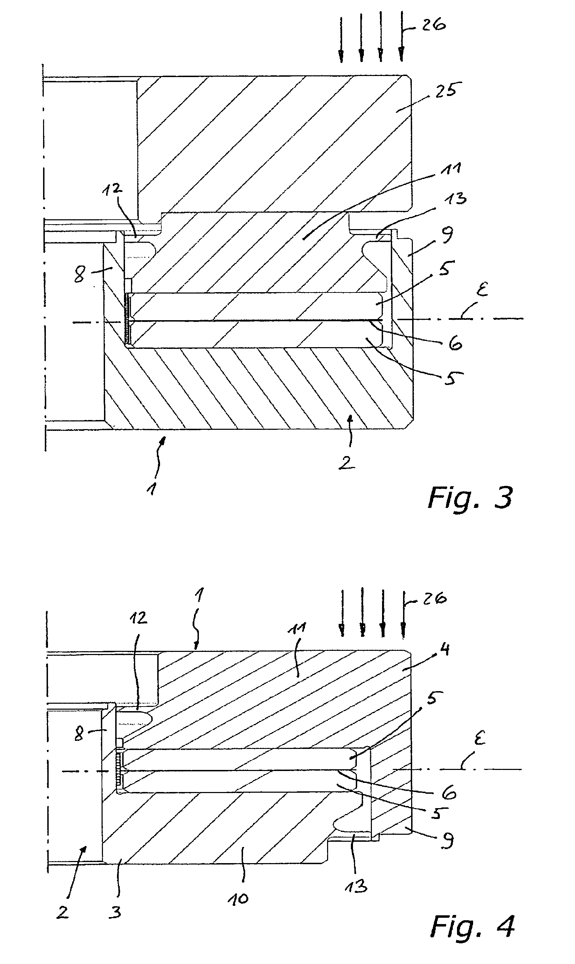

Die Fig. 3 und Fig. 4 zeigen in einer anschaulichen Gegenüberstellung in vergrößertem Maßstab die Unterschiede zwischen dem Stand der Technik (Fig. 3) und der Erfindung (Fig. 4). Beim Kraftmessring 1 gemäß Stand der Technik in ist der innere Membranbereich 12 und der äußere Membranbereich 13 auf einer Seite einer durch das piezoelektrische Messelement 5 bzw. den Messelementstapel aus zwei oder mehreren Messelementen 5 definierten Symmetrieebene ε angeordnet. Das Druckübertragungselement 11 wird dadurch auf beiden Seiten lediglich über die dünnen Membranbereiche 12, 13 mit dem Innenflansch 8 bzw. dem Außenflansch 9 des Gehäuses 2 verbunden. Für eine gleichmäßige Krafteinleitung ist daher ein ringförmiges Zwischenstück 25 notwendig.

Anders ist die Situation beim erfindungsgemäßen Kraftmessring 1 in Fig. 4, dessen Gehäuse 2 einen ersten, unteren Gehäuseteil 3 mit einem ringförmigen Innenflansch 8 und einem ersten Druckübertragungselement 10, sowie einen zweiten, oberen Gehäuseteil 4 mit einem ringförmigen Außenflansch 9 und einem zweiten Druckübertragungselement 11 aufweist. Der innere Membranbereich 12 ist zwischen dem Innenflansch 8 und dem zweiten Druckübertragungselement 11 angeordnet. Weiters ist der äußere Membranbereich 13 zwischen dem Außenflansch 9 und dem ersten Druckübertragungselement 10 platziert. Im Unterschied zum Stand der Technik liegen somit der innere 12 und der äußere Mem branbereich 13 auf gegenüberliegenden Seiten der durch die piezoelektrischen Messelemente 5 definierten Symmetrieebene ε.

Erfindungsgemäß kann der Innenflansch 8 samt dem ersten Druckübertragungselement 10 und dem äußeren Membranbereich 13 einstückig ausgebildet sein. Das gleiche gilt für den Außenflansch 9, das zweite Druckübertragungselement und den inneren Membranbereich 12. Dadurch entsteht ein robuster Kraftmessring, der auch bei einseitiger Krafteinleitung, wie in Fig. 4 dargestellt (s. Pfeile 26) verwindungssteif ist und ohne ringförmiges Zwischenstück 25 auskommt.

Weiters kann der Außenflansch 9 im Vergleich zum Innenflansch 8 verstärkt ausgeführt sein, um eine weitere Versteifung des Kraftmessrings zu erzielen

Beim dargestellten Beispiel ist der äußere Membranbereich 13 an seinem Außenrand mit dem Außenflansch 9 und der inneren Membranbereich 12 an seinem Innenrand mit dem Innenflansch 8 verschweißt. Der Innenflansch 8 und das erste Druckübertragungselement 10 sind im Querschnitt im Wesentlichen L-förmig ausgebildet. Das gleiche gilt für den Außenflansch 9 und das zweite Druckübertragungselement 11.

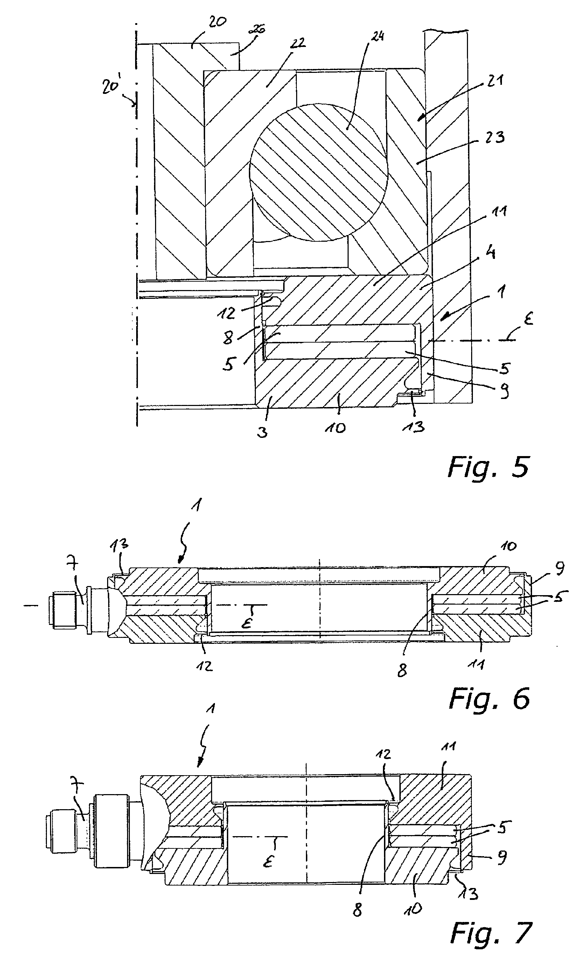

Wie beim Stand der Technik gemäß Fig. 1 bis Fig. 3 können auch beim erfindungsgemäßen Kraftmessring gemäß Fig. 4 bis Fig. 7 beispielsweise zwei piezoelektrische Messelemente 5 im zweiteiligen Gehäuse 2 angeordnet sein, deren benachbarten Kontaktflächen eine Ableitelektrode 6 kontaktieren. Ein Steckerelement 7 (siehe Fig. 6 und Fig. 7) kann in gleicher Weise - wie in Fig. 1 dargestellt - am Außenflansch 9 angeordnet sein.

In Fig. 5 ist der Kraftmessring 1 gemäß Fig. 4 in einer Einbausituation zur Messung der Axialkräfte eines Axialkugellagers 21 dargestellt. Der bei bekannten Kraftmessringen nötige Zwischenring 25 zur gleichmäßigen Einleitung der Lagerkräfte (siehe Fig. 2) kann hier entfallen, wodurch die Bauhöhe der Messanordnung wesentlich verringert wird. Die Welle 20 stützt sich, beispielsweise mit einem Absatz 26 der Welle 20, unter Zwischenlage eines Axialkugellagers 21 am Kraftmessring 1 ab.

In den Fig. 6 und Fig. 7 sind Varianten des erfindungsgemäßen Kraftmessringes 1 mit unterschiedlichen Abmessungen und Ausführungsdetails dargestellt.

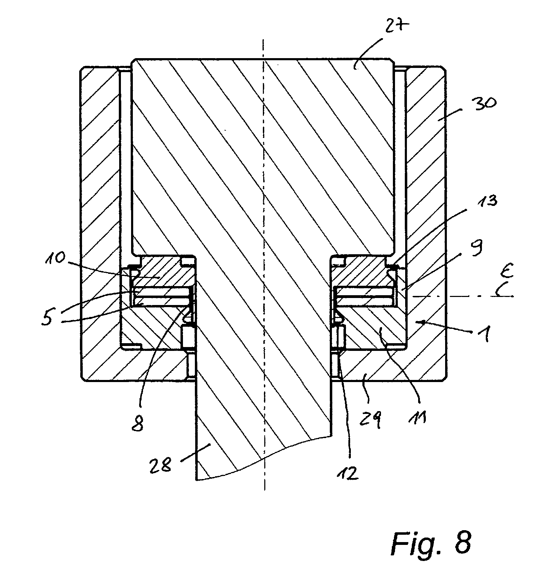

In Fig. 8 ist ein weiteres, vorteilhaftes Anwendungsbeispiel der Erfindung dargestellt. Es handelt sich hier um eine Vorrichtung zur Messung einer axial auf einen Stempel 27 wirkenden Kraft unter Verwendung des erfindungsgemäßen Kraftmessringes 1. Der Stempel 27 auf den die zu messende Kraft einwirkt, durchsetzt den Kraftmessring 1 mit seinem Schaft 28, wobei der Schaft 28 am ringförmigen Innenflansch 8 des Kraftmessringes 1 anliegt und von diesem zentriert wird. Durch die erfindungsgemäße Konstruktion des Kraftmessringes 1 kommt es - im Unterschied zu einem Kraftmessring gemäß Stand der Technik - zu keiner Relativbewegung zwischen dem Schaft 28 und dem Innenflansch 8, wodurch Hystereseerscheinungen bei der Kraftmessung vermieden werden können. Der Kraftmessring 1 stützt sich an einem Innenflansch 29 des Gehäuses 30 ab.

## Patentansprüche

1. Kraftmessring (1) mit einem ringförmigen Gehäuse (2), welches zumindest ein piezoelektrisches Messelement (5) aufnimmt sowie mit einem Druckübertragungselement, welches über innere und äußere, kreisringförmige Membranbereiche (12, 13) mit einem ringförmigen Innenflansch (8) und einem ringförmigen Außenflansch (9) des Gehäuses verbunden, vorzugsweise verschweißt, ist, **dadurch gekennzeichnet, dass** der innere und der äußere Membranbereich (12, 13) des Kraftmessringes (1) auf gegenüberliegenden Seiten einer durch das zumindest eine piezoelektrische Messelement (5) definierten Symmetrieebene (ε) liegen.

2. Kraftmessring (1) nach Anspruch 1, **dadurch gekennzeichnet, dass** das Gehäuse (2) einen ersten Gehäuseteil (3) mit dem ringförmigen Innenflansch (8) und einem ersten Druckübertragungselement (10) sowie einen zweiten Gehäuseteil (4) mit dem ringförmigen Außenflansch (9) und einem zweiten Druckübertragungselement (11) aufweist, wobei der innere Membranbereich (12) zwischen dem Innenflansch (8) und dem zweiten Druckübertragungselement (11) und der äußere Membranbereich (13) zwischen dem Außenflansch (9) und dem ersten Druckübertragungselement (10) angeordnet ist.

3. Kraftmessring (1) nach Anspruch 2, **dadurch gekennzeichnet, dass** der Innenflansch (8), das erste Druckübertragungselement (10) und der äußere Membranbereich (13) einerseits sowie der Außenflansch (9), das zweite Druckübertragungselement (11) und der innere Membranbereich (12) andererseits jeweils einstückig ausgebildet sind.

4. Kraftmessring (1) nach Anspruch 2 oder 3, **dadurch gekennzeichnet, dass** der äußere Membranbereich (13) an seinem Außenrand mit dem Außenflansch (9) und der innere Membranbereich (12) an seinem Innenrand mit dem Innenflansch (8) verschweißt ist.

5. Kraftmessring (1) nach einem der Ansprüche 2 bis 4, **dadurch gekennzeichnet, dass** der Innenflansch (8) und das erste Druckübertragungselement (10) sowie der Außenflansch (9) und das zweite Druckübertragungselement (11) im Querschnitt jeweils im Wesentlichen L-förmig ausgebildet sind.

6. Kraftmessring (1) nach einem der Ansprüche 2 bis 5, **dadurch gekennzeichnet, dass** der Außenflansch (9) im Vergleich zum Innenflansch (8) verstärkt ausgeführt ist.

7. Kraftmessring (1) nach einem der Ansprüche 1 bis 6, **dadurch gekennzeichnet, dass** im ringförmigen Gehäuse (2) zwei piezoelektrische Messelemente (5) angeordnet sind, deren benachbarten Kontaktflächen eine dazwischen angeordnete Ableitelektrode (6) kontaktieren.

8. Vorrichtung zur Messung einer axial auf eine Welle (20) wirkende Kraft unter Verwendung eines Kraftmessringes (1) nach einem der Ansprüche 1 bis 7, **dadurch gekennzeichnet, dass** sich die Welle (20), beispielsweise mit einem Absatz (26) der Welle (20), unter Zwischenlage eines Axialkugellagers (21) am Kraftmessring (1) abstützt.

9. Vorrichtung zur Messung einer axial auf einen Stempel (27) wirkenden Kraft unter Verwendung eines Kraftmessringes (1) nach einem der Ansprüche 1 bis 7, **dadurch gekennzeichnet, dass** der Stempel (27) den Kraftmessring (1) mit einem Schaft (28) durchsetzt, wobei der Schaft (28) am ringförmigen Innenflansch (8) des Kraftmessringes (1) anliegt und von diesem zentriert ist.

## Claims

1. Force-measuring ring (1) with an annular housing (2) containing at least one piezoelectric measuring element (5), and with a pressure-transmission element, which is attached, preferably by welding, to an annular inner flange (8) and an annular outer flange (9) of said housing via inner and outer circular ring-shaped membrane areas (12, 13) **characterised in that** the inner and outer membrane areas (12, 13) of the force-measuring ring (1) lie on opposite sides of a symmetry plane (ε) defined by the at least one piezoelectric measuring element (5).

2. Force-measuring ring (1) according to claim 1, **characterised in that** the housing (2) comprises a first housing part (3) with an annular inner flange (8) and a first pressure- transmission element (10), and a second housing part (4) with an annular outer flange (9) and a second pressure-transmission element (11), the inner membrane area (12) being located between the inner flange (8) and the second pressure-transmission element (11), and the outer membrane area (13) being located between the outer flange (9) and the first pressure-transmission element (10).

3. Force-measuring ring (1) according to claim 2, **characterised in that** the inner flange (8) and the first pressure- transmission element (10) and the outer membrane area (13) are realized as one integral part, as are the outer flange (9) and the second pressure-transmission element (11) and the inner membrane area (12).

4. Force-measuring ring (1) according to claim 2 or 3, **characterised in that** the outer membrane area (13) is welded at its outer rim to the outer flange (9), while the inner membrane area (12) is welded at its inner rim to the inner flange (8.

5. Force-measuring ring (1) according to any of claims 2 to 4, **characterised in that** the inner flange (8) and the first pressure-transmission element (10) as well as the outer flange (9) and the second pressure-transmission element (11) are essentially L-shaped in cross-section.

6. Force-measuring ring (1) according to any of claims 2 to 5, **characterised in that** the outer flange (9) is made stronger than the inner flange (8).

7. Force-measuring ring (1) according to any of claims 1 to 6, **characterised in that** in the annular housing (2) there are located two piezoelectric measuring elements (5) whose adjacent contact surfaces are in contact with a pick-up electrode (6) placed between them.

8. Assembly for measuring a force acting axially on a shaft (20) with the use of a force-measuring ring (1) according to any of claims 1 to 7, **characterised in that** said shaft (20) is supported on the force-measuring ring (1), for instance by means of a shoulder (26) of the shaft (20), an axial ball bearing (21) being interposed.

9. Assembly for measuring a force acting axially on a stamp (27) with the use of a force-measuring ring (1) according to any of claims 1 to 7, **characterised in that** a shank (28) of said stamp (27) passes through the force-measuring ring (1), said shank (28) touching the annular inner flange (8) of the force-measuring ring (1) and being centered by said inner flange.

## Revendications

1. Anneau dynamométrique (1) comportant un boîtier annulaire (2) qui reçoit au moins un élément de mesure piezoélectrique (5), ainsi qu'un élément de transmission de la pression qui est relié de préférence soudé par l'intermédiaire de zones de membranes annulaires internes et externes (12, 13) en forme de couronne circulaire avec une bride interne annulaire (8) et une bride externe annulaire (9) du boîtier,
**caractérisé en ce que**
la zone de membrane interne et la zone de membrane externe (12, 13) de l'anneau dynamométrique (1) sont situées sur des côtés opposés d'un plan de symétrie (ε) défini par l'élément de mesure piezoélectrique (5).

2. Anneau dynamométrique (1) conforme à la revendication 1,
**caractérisé en ce que**
le boîtier (2) comporte une première partie de boîtier (3) comprenant la bride annulaire interne (8) et un premier élément de transmission de la pression (10) ainsi qu'une seconde partie de boîtier (4) comprenant la bride annulaire externe (9) et un second élément de transmission de pression (11), la zone de membrane interne (12) étant située entre la bride interne (8) et le second élément de transmission de la pression (11) tandis que la zone de membrane externe (13) est située entre la bride externe (9) et le premier élément de transmission de la pression (10).

3. Anneau dynamométrique (1) conforme à la revendication 2,
**caractérisé en ce que**
la bride interne (8), le premier élément de transmission de la pression (10) et la zone de membrane externe (13), d'une part ainsi que la bride externe (9), le second élément de transmission de la pression (11) et la zone de membrane interne (12), d'autre part sont respectivement réalisés en une seule pièce.

4. Anneau dynamométrique (1) conforme à la revendication 2 ou 3,
**caractérisé en ce que**
la zone de membrane externe (13) est soudée sur son bord extérieur avec la bride externe (9), tandis que la zone de membrane interne (12) est soudée sur son bord interne avec la bride interne (8).

5. Anneau dynamométrique (1) conforme à l'une des revendications 2 à 4,
**caractérisé en ce que**
la bride interne (8) et le premier élément de transmission de la pression (10) ainsi que la bride interne (9) et le second élément de transmission de la pression (11) sont respectivement réalisés avec une section essentiellement en forme de L.

6. Anneau dynamométrique (1) conforme à l'une des revendications 2 à 5,
**caractérisé en ce que**
la bride externe (9) est renforcée par rapport à la bride interne (8).

7. Anneau dynamométrique (1) conforme à l'une des revendications 1 à 6,
**caractérisé en ce que**
dans le boîtier annulaire (2) sont montés deux éléments de mesure piezoélectriques (5) dont les surfaces de contacts voisines viennent en contact avec une électrode de décharge (6) située entre celles-ci.

8. Dispositif de mesure d'une force agissant axialement sur un arbre (20) en utilisant un anneau dynamométrique (1) conforme à l'une des revendications 1 à 7,
**caractérisé en ce que**
l'arbre (20) s'appuie sur l'anneau dynamométrique (1) par exemple par un talon (26) avec interposition d'un roulement à billes axial (21).

9. Dispositif de mesure d'une force agissant axialement sur un poinçon (27) en utilisant un anneau dynamométrique (1) conforme à l'une des revendications 1 à 7,
**caractérisé en ce que**
le poinçon (27) traverse l'anneau dynamométrique (1) par une tige (28), cette tige (28) s'appliquant sur la bride interne annulaire (8) de l'anneau dynamométrique (1) et étant centrée par celle-ci.
